(19) Europäisches Patentamt
European Patent Office
Office européen des brevets

(11) **EP 4 482 106 A1**

(12) **EUROPEAN PATENT APPLICATION**
published in accordance with Art. 153(4) EPC

(43) Date of publication:
**25.12.2024 Bulletin 2024/52**

(21) Application number: **23755817.6**

(22) Date of filing: **15.02.2023**

(51) International Patent Classification (IPC):
***H04L 41/5022*** *(2022.01)*

(86) International application number:
**PCT/CN2023/076263**

(87) International publication number:
**WO 2023/155815 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.02.2022 CN 202210142967**

(71) Applicant: **TP-Link Corporation Limited Kowlon Hong Kong (HK)**

(72) Inventor: **YE, Lingqing Shanghai 201702 (CN)**

(74) Representative: **V.O. P.O. Box 87930 2508 DH Den Haag (NL)**

(54) **PACKET PROCESSING METHOD, APPARATUS, TERMINAL DEVICE, AND STORAGE MEDIUM**

(57) Disclosed are a method and apparatus for processing messages, a terminal device, and a storage medium. The method includes: receiving the messages, caching real-time messages into a priority processing queue, and caching non-real-time messages into a common queue; checking whether all messages in a firmware buffer are completely received, if no, returning to receive messages, and if yes, adjusting a single processing amount of the non-real-time messages dynamically according to the number of the real-time messages; processing all the real-time messages; and processing the non-real-time messages according to the adjusted single processing amount, checking whether a new message is required to be received from the firmware buffer after a single processing amount of non-real-time messages are processed every time, if yes, returning to receive messages, and if no, continuing to process a single processing amount of non-real-time messages until all the non-real-time messages are processed. According to an example of the disclosure, a packet loss rate of the real-time messages can be reduced, network time delays of the real-time messages can be reduced, timeliness of the real-time messages can be guaranteed, and user experience can be improved.

Fig. 1

Messages are received from a firmware buffer sequentially, messages satisfying real-time message condition are cached into a priority processing queue, and messages not satisfying the real-time message condition are cached into a common queue, wherein the messages satisfying the real-time message condition are real-time messages, and the messages not satisfying the real-time message condition are non-real-time messages — S1

Whether all the messages in the firmware buffer are completely received is checked; if no, S1 is returned to be performed until all the messages in the firmware buffer are completely received; and if yes, a single processing amount of the non-real-time messages are adjusted dynamically according to the number of the real-time messages in the priority processing queue, and an adjusted single processing amount of the non-real-time messages are adjusted — S2

All the real-time messages cached in the priority processing queue are processed — S3

The non-real-time messages cached in the common queue are processed according to the single processing amount, whether a new message is required to be received from the firmware buffer is checked after a single processing amount of non-real-time messages are processed every time, if yes, S1 is returned to be performed, and if no, a single processing amount of non-real-time messages are continued to be prpcessed until all the non-real-time messages are completely processed — S4

## Description

### Cross-Reference to Related Application

The disclosure claims the priority to Chinese Patent Application No. 202210142967.8, filed with the Chinese Patent Office on February 16, 2022 and entitled "Method and apparatus for processing messages, terminal device, and storage medium", which is incorporated herein in its entirety by reference.

### Technical Field

The disclosure relates to the technical field of data transmission, and particularly relates to a method and apparatus for processing messages, a terminal device, and a storage medium.

### Background

The message in a network may be approximately divided into two types. One type is a real-time message, which has an enormously high requirement for the real-time performance. Such message includes but is not limited to an Address Resolution Protocol (ARP) message, an Internet Control Message Protocol (ICMP) message, a multicast message, a Transmission Control Protocol (TCP) packet, etc. The other one type is a non-real-time message, which is insensitive to the time delay. A certain time delay is acceptable when this message is processed. Such message includes but is not limited to various file download messages, etc.

In the related art, when a home gateway operates, if it takes too much time to process the non-real-time messages, time delays of the real-time messages will be too long, and the real-time messages may be discarded, which severely affects user experience. Moreover, a polling strategy is adopted in the related art, and a single processing amount of each priority is limited. If some messages have extremely high requirements for real-time performance, and a maximum processing amount of the priority is reached, the messages may only be processed in a next round, so the messages will lose the real-time performance. In addition, if a message processing rate of a central processing unit (CPU) is less than a message arrival rate, packets will be lost. Priority of the discarded messages cannot be determined, and high-priority messages or low-priority messages may be discarded. If real-time messages are discarded, user experience will be severely affected.

### Summary

The technical problem to be solved by examples of the disclosure is to provide a method and apparatus for processing messages, a terminal device, and a storage medium, which can reduce a packet loss rate of real-time messages, shorten network time delays of the real-time messages, guarantee timeliness of the real-time messages, and improve user experience.

In order to realize the above objective, an example of the disclosure provides a method for processing messages. The method includes:

S1: receiving the messages from a firmware buffer sequentially, caching messages satisfying a real-time message condition into a priority processing queue, and caching messages not satisfying the real-time message condition into a common queue for buffering, wherein the messages satisfying the real-time message condition are real-time messages, and the messages not satisfying the real-time message condition are non-real-time messages;

S2: checking whether all messages in the firmware buffer are completely received; if no, returning to S1 until all the messages in the firmware buffer are completely received; and if yes, adjusting a single processing amount of the non-real-time messages dynamically according to the number of the real-time messages in the priority processing queue, and obtaining an adjusted single processing amount of the non-real-time messages;

S3: processing all the real-time messages cached in the priority processing queue; and

S4: processing the non-real-time messages cached in the common queue according to the adjusted single processing amount, checking whether a new message is required to be received from the firmware buffer after the adjusted single processing amount of non-real-time messages are processed every time, if yes, returning to S1, and if no, continuing to process the adjusted single processing amount of non-real-time messages until all non-real-time messages are completely processed.

As an improvement to the above solution, the adjusting a single processing amount of the non-real-time messages dynamically according to the number of real-time messages in the priority processing queue, and obtaining an adjusted single processing amount of the non-real-time messages in S2 include: determining the number of the real-time messages in the priority processing queue; and adjusting the single processing amount of the non-real-time messages dynamically according to a numerical relation between the number of the real-time messages, a first threshold and a second threshold, and obtaining the adjusted single processing amount of the non-real-time messages, wherein the first threshold is less than the second threshold.

As an improvement to the above solution, the adjusting the single processing amount of the non-real-time messages dynamically according to a numerical relation between the number of the real-time messages, a first threshold and a second threshold, and obtaining the adjusted single processing amount of the non-real-time messages include: determining a maximum message processing amount of a Central Processing Unit (CPU) in a time unit as the adjusted single processing amount in a case that the number of the real-time messages is 0; taking, in a case that the number of the real-time messages is greater than 0 and less than the first threshold, or the number of the real-time messages is greater than or equal to the first threshold and less than or equal to the second threshold, the number of the real-time messages as variables of a predetermined functions, adjusting the single processing amount of the non-real-time messages dynamically by means of the predetermined functions, and obtaining the adjusted single processing amount of the non-real-time messages; and determining a predetermined constant as the adjusted single processing amount in a case that the number of the real-time messages is greater than the second threshold.

As an improvement to the above solution, the predetermined functions are linear functions, and a slope and an adjustment constant of a linear function in the case that the number of the real-time messages is greater than 0 and less than the first threshold are different from a slope and an adjustment constant of a linear function in the case that the number of the real-time messages is greater than or equal to the first threshold and less than or equal to the second threshold.

As an improvement to the above solution, the first threshold is $A = a \times L$, the second threshold is $B = b \times L$, L is a length of the priority processing queue, a and b are coefficients, and $a + b = 1$.

As an improvement to the above solution, the processing the non-real-time messages cached in the common queue according to the adjusted single processing amount in S4 includes:

retrieving the adjusted single processing amount after it is detected that all real-time messages in the priority processing queue are completely processed; and

processing the non-real-time messages cached in the common queue according to the adjusted single processing amount every time.

As an improvement to the above solution, in a case that a message in the common queue overflows, a non-real-time message stored for a longest time at a head of the common queue is discarded.

An example of the disclosure further provides an apparatus for processing messages. The apparatus includes:

a receiving module, configured to receive the messages from a firmware buffer sequentially, cache messages satisfying a real-time message condition into a priority processing queue, and cache messages not satisfying the real-time message condition into a common queue, wherein the messages satisfying the real-time message condition are real-time messages, and the messages not satisfying the real-time message conditions are non-real-time messages;

a checking module, configured to check whether all messages in the firmware buffer are completely received; if no, return to S1 until all the messages in the firmware buffer are completely received; and if yes, adjust a single processing amount of the non-real-time messages dynamically according to the number of the real-time messages in the priority processing queue, and obtain an adjusted single processing amount of the non-real-time messages;

a real-time message processing module, configured to process all the real-time messages cached in the priority processing queue; and

a non-real-time message processing module, configured to process the non-real-time messages cached in the common queue according to the adjusted single processing amount, check whether a new message is required to be received from the firmware buffer after the adjusted single processing amount of non-real-time messages are processed every time, if yes, return to S1, and if no, continue to process the adjusted single processing amount of non-real-time messages until all non-real-time messages are completely processed.

As an improvement to the above solution, the checking module adjusts the single processing amount of the non-real-time messages dynamically according to the number of the real-time messages in the priority processing queue, and obtains the adjusted single processing amount of the non-real-time messages as follows: determining the number of the real-time messages in the priority processing queue; and adjusting the single processing amount of the non-real-time messages dynamically according to a numerical relation between the number of the real-time messages, a first threshold and a second threshold, and obtaining the adjusted single processing amount of the non-real-time messages, wherein the first threshold is less than the second threshold.

As an improvement to the above solution, the checking module adjusts the single processing amount of the non-real-time messages dynamically according to a numerical relation between the number of the real-time messages, a first threshold and a second threshold, and obtains the adjusted single processing amount of the non-real-time messages as follows: determining a maximum message processing amount of a Central Processing Unit (CPU) in a time unit as the adjusted single processing amount in a case that the number of the real-time messages is 0; taking, in a case that the number of the real-time messages is greater than 0 and less than the first threshold, or the number of the real-time messages is greater than or equal to the first threshold and less than or equal to the second threshold, the number of the real-time messages as variables of predetermined functions, adjusting the single processing amount of the non-real-time messages dynamically by means of the predetermined functions, and obtaining the adjusted single processing amount of the non-real-time messages; and determining a predetermined constant as the adjusted single processing amount in a case that the number of the real-time messages is greater than the second threshold.

As an improvement to the above solution, the predetermined function are linear functions, and a slope and an adjustment constant of a linear function in the case that the number of the real-time messages is greater than 0 and less than the first threshold are different from a slope and an adjustment constant of a linear function in the case that the number of the real-time messages is greater than or equal to the first threshold and less than or equal to the second threshold.

As an improvement to the above solution, the first threshold is $A=a\times L$, the second threshold is $B=b\times L$, L is a length of the priority processing queue, a and b are coefficients, and $a+b=1$.

An example of the disclosure further provides a terminal device. The terminal device includes a processor, a memory and a computer program stored in the memory and configured to be executed by the processor. The processor implements any one of the above methods for processing messages when executing the computer program.

An example of the disclosure further provides a computer-readable storage medium. The computer-readable storage medium includes a stored computer program. When running, the computer program controls a device in which the computer-readable storage medium is located to execute any one of the above methods for processing messages.

Compared with the related art, the method and apparatus for processing messages, a terminal device, and a storage medium provided in examples of the disclosure have beneficial effects as follows: an original coherent flow of receiving and processing messages is divided into flows as follows: the messages are received and cached first, and then the messages are processed according to a designed message processing strategy. A processing amount of non-real-time messages is dynamically adjusted according to the number of real-time messages in a priority processing queue, and a single processing amount of the non-real-time messages is obtained. After all the real-time messages are processed, the non-real-time messages are processed according to the single processing amount of the non-real-time messages. Moreover, after a single processing amount of non-real-time messages are processed every time, whether a new message is required to be received in the firmware buffer is checked such that high-priority messages can be prevented from losing. If yes, the next step is returned to the messages receiving step. If no, a single processing amount of non-real-time messages are continued to be processed until all the non-real-time messages are completely processed. Therefore, a packet loss rate of the real-time messages can be reduced, network time delays of the real-time messages can be reduced, timeliness of the real-time messages can be guaranteed, and user experience can be improved.

## Brief Description of the Drawings

Fig. 1 is a schematic flow diagram of a preferred example of a method for processing messages according to the disclosure;

Fig. 2 is a schematic flow diagram of another preferred example of a method for processing messages according to the disclosure;

Fig. 3 is a schematic structural diagram of a preferred example of an apparatus for processing messages according to the disclosure; and

Fig. 4 is a schematic structural diagram of a preferred example of a terminal device according to the disclosure.

## Detailed Description of the Embodiments

The technical solutions of the examples of the disclosure will be clearly and completely described below in combination with the accompanying drawings of the examples of the disclosure. Apparently, the described examples are merely some examples, rather than all examples of the disclosure. All other examples obtained by a person of ordinary skill in the art on the basis of the examples of the disclosure without creative efforts shall fall within the protection scope of the disclosure.

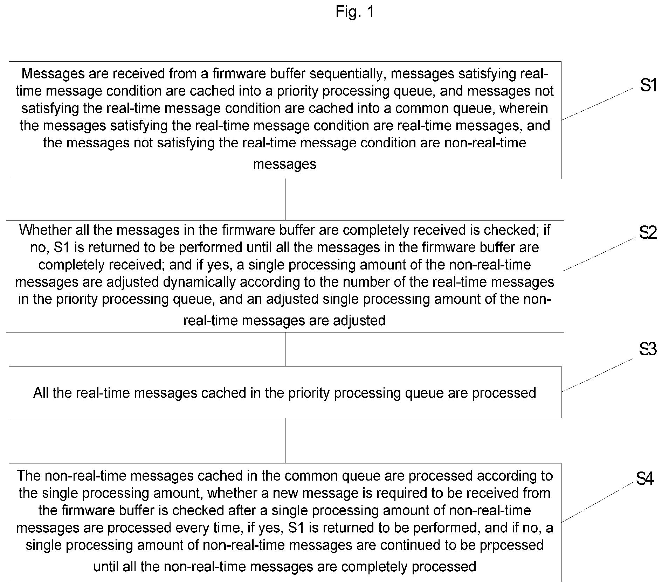

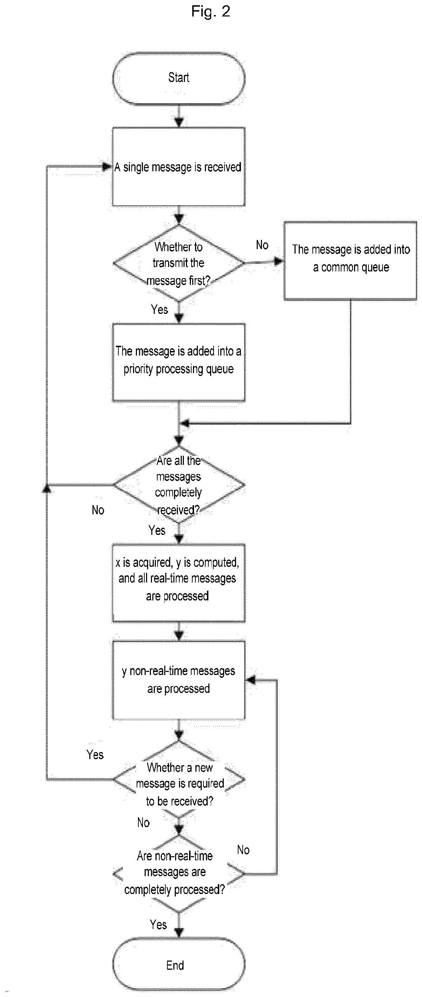

With reference to Figs. 1 and 2, a schematic flow diagram of a preferred example of a method for processing messages according to the disclosure is shown in Fig. 1. A schematic flow diagram of another preferred example of a method for processing messages according to the disclosure is shown in Fig. 2. The method for processing messages includes:

S1: The messages are received from a firmware buffer sequentially, messages satisfying a real-time message condition are cached into a priority processing queue, and messages not satisfying the real-time message condition are cached into a common queue, wherein the messages satisfying the real-time message condition are real-time messages, and the messages not satisfying the real-time message condition are non-real-time messages.

S2: Whether all messages in the firmware buffer are completely received is checked; if no, S1 is returned to be performed until all the messages in the firmware buffer are completely received; and if yes, a single processing amount of the non-real-time messages is adjusted dynamically according to the number of the real-time messages in the priority processing queue, and an adjusted single processing amount of the non-real-time messages is obtained.

S3: All the real-time messages cached in the priority processing queue are processed.

S4: The non-real-time messages cached in the common queue are processed according to the single processing amount, whether a new message is required to be received from the firmware buffer is checked after a single processing amount of non-real-time messages are processed every time, if yes, S1 is returned to be performed, and if no, a single processing amount of non-real-time messages are continued to be processed until all the non-real-time messages are completely processed.

As at least one alternative embodiment, firstly, during hardware packet reception, messages are cached in the firmware buffer, then the hardware packet reception is interrupted, and the software packet reception is notified. Software receives the messages one by one from the buffer. When each packet is received, whether the real-time message condition is satisfied is determined. The messages satisfying the real-time message condition, that is, the real-time messages, are cached in the priority processing queue. The messages not satisfying the real-time message condition, that is, the non-real-time messages, are cached in the common queue. In this process, all the messages in the firmware buffer are required to be completely received first. Since software processing time of some messages is long, by taking out the messages in time and vacating hardware resources, packet loss can be avoided to a certain extent. Then, whether all the messages in the firmware buffer are completely received is checked. If no, messages are continued to be received until all the messages in the firmware buffer are completely received. If yes, a single processing amount of non-real-time messages is dynamically adjusted according to number x of the real-time messages in the priority processing queue, and the adjusted single processing amount y of the non-real-time messages is obtained. All the real-time messages cached in the priority processing queue are processed. The non-real-time messages cached in the common queue are processed according to the single processing amount. Whether a new message is required to be received from the firmware buffer is checked after a single processing amount of non-real-time messages are processed every time. If yes, messages are returned to be received. If no, a single processing amount of non-real-time messages are continued to be processed until all the non-real-time messages are completely processed.

It should be noted that the messages are cached in the firmware buffer during hardware packet reception, and software may process messages at the same time. When the software processes the messages, the hardware may continue to receive the messages and caches the messages in the firmware buffer. Therefore, after a single amount of non-real-time messages are processed, it is required to return to check whether a new message is required to be received. Determination methods of different real-time messages are different. The Address Resolution Protocol (ARP) message, the Internet Control Messages Protocol (ICMP) message, the Transmission Control Protocol (TCP) message, etc. may be identified by identifying a data link layer/Internet Protocol (IP) used by these messages. Multicast messages may be identified by determining whether a matching Media Access Control (MAC) address satisfies a multicast MAC address.

In the example, by adjusting a flow of receiving and processing messages by a home gateway, an original coherent flow of receiving and processing messages is divided into flows as follows: the messages are received and cached first, and then the messages are processed according to a designed message processing strategy. A processing amount of non-real-time messages is dynamically adjusted according to the number of real-time messages in a priority processing queue, and a single processing amount of the non-real-time messages is obtained. After all the real-time messages are processed, the non-real-time messages are processed according to the single processing amount of the non-real-time messages. Moreover, after a single processing amount of non-real-time messages are processed every time, whether a new message is required to be received from the firmware buffer is checked such that high-priority messages can be prevented from losing. If yes, messages are returned to be received. If no, a single processing amount of non-real-time messages are continued to be processed until all the non-real-time messages are completely processed. Therefore, a packet loss rate of the real-time messages can be reduced, network time delays of the real-time messages can be reduced, timeliness of the real-time messages can be guaranteed, and user experience can be improved.

In another preferred example, the step of adjusting the single processing amount of the non-real-time messages dynamically according to the number of the real-time messages in the priority processing queue, and obtaining the adjusted single processing amount of the non-real-time messages in S2 includes: the number of the real-time messages in the priority processing queue is determined; and the single processing amount of the non-real-time messages is adjusted dynamically according to a numerical relation between the number of the real-time messages, a first threshold and a second threshold, and the adjusted single processing amount of the non-real-time messages is obtained, wherein the first threshold is less than the second threshold.

In the example, the single processing amount of the non-real-time messages may be dynamically adjusted according to the number of the real-time messages such that network time delay of the real-time messages can be reduced, and timeliness of the real-time messages can be ensured.

In the above example, the step of adjusting the single processing amount of the non-real-time messages dynamically according to the numerical relation between the number of the real-time messages, the first threshold and the second threshold, and obtaining the adjusted single processing amount of the non-real-time messages includes: the maximum message processing amount of the Central Processing Unit (CPU) in a time unit is determined as the single processing amount in the case that the number of the real-time messages is 0; in the case that the number of the real-time messages is greater than 0 and less than the first threshold, or the number of the real-time messages is greater than or equal to the first threshold and less than or equal to the second threshold, the number of the real-time messages is taken as variables of predetermined functions, the single processing amount of the non-real-time messages are adjusted dynamically by means of the predetermined functions, and the adjusted single processing amount of the non-real-time messages are obtained; and a predetermined constant is determined as the single processing amount in the case that the number of the real-time messages is greater than the second threshold.

Under the condition that the predetermined functions are linear functions, a slope and an adjustment constant of a linear function in a case that the number of the real-time messages is greater than 0 and less than the first threshold are different from a slope and an adjustment constant of a linear function in a case that the number of the real-time messages is greater than or equal to the first threshold and less than or equal to the second threshold.

The step of adjusting the single processing amount of the non-real-time messages dynamically according to the number of the real-time messages in the priority processing queue, and obtaining the adjusted single processing amount of the non-real-time messages in S2 includes:
the single processing amount of the non-real-time messages is adjusted dynamically by means of the piecewise

$$y(x) = \begin{cases} y_1 & x = 0 \\ c_1\text{-}c_2x & 0 < x < A \\ c_3\text{-}c_4x & A \le x \le B \\ y_2 & B \le x \end{cases}$$

function , the adjusted single processing amount y of the non-real-time messages is obtained.

As at least one alternative embodiment, x is the number of the real-time messages in the priority processing queue, A is a first threshold, B is a second threshold, $y_1$ is the maximum message processing amount of the CPU in a time unit, $y_2$ is a preset constant used for controlling the processing rate of the non-real-time messages when the real-time messages are seriously accumulated, $c_1$ and $c_3$ are adjustment constants, and $c_2$ and $c_4$ are slopes.

As at least one alternative embodiment, in the example, it is suggested that $y_1$ is the maximum message processing amount of the CPU in the time unit, and can also be set according to actual requirements during specific application. The single processing amount of the non-real-time messages is dynamically adjusted by means of the piecewise function

$$y(x) = \begin{cases} y_1 & x = 0 \\ c_1\text{-}c_2x & 0 < x < A \\ c_3\text{-}c_4x & A \le x \le B \\ y_2 & B \le x \end{cases}$$

, and the adjusted single processing amount y of the non-real-time messages is obtained. When number x of the real-time messages in the priority processing queue is increased from 0 to A, the single processing amount of non-real-time messages slowly decreases. When number x of the real-time messages in the priority processing queue increases from A to B, the single processing amount of non-real-time messages greatly decreases. When number x of the real-time messages in the priority processing queue is greater than B, it is indicated that the real-time messages are seriously accumulated. It is required to strictly limit the single processing amount of the non-real-time messages, and the real-time messages are processed first such that timeliness of the real-time messages is ensured. Specific interval settings can be adjusted according to actual requirements.

It should be noted that single processing amount y of the non-real-time messages non-linearly decreases as number x of cached real-time messages increases. The greater x is, the faster a decrease speed of y is. A processing rate of the non-real-time messages has a nonlinear relation with single processing amount y. When y is small, the processing rate of the non-real-time messages rapidly increases. As y increases, the processing rate of the non-real-time messages slowly increases. When y reaches a threshold, the processing rate of the non-real-time messages basically stops increasing. It should be noted that in cases of different models, interval ranges may fluctuate to a certain extent.

In the example, a dynamic adjustment formula is a linear function such that the system can be effectively prevented from complexly operating, and can be prevented from affecting the performance of processing messages.

In another preferred example, the first threshold is A=a×L, the second threshold is B=b×L, L is a length of the priority processing queue, a and b are coefficients, and a+b=1.

For example, in the example, a is 1/3, b is 2/3, and the piecewise function is as follows:

$$y(x) = \begin{cases} y_1 & x = 0 \\ c_1\text{-}c_2 x & 0 < x < \frac{1}{3}L \\ c_3\text{-}c_4 x & \frac{1}{3}L \leq x \leq \frac{2}{3}L \\ y_2 & \frac{2}{3}L \leq x \end{cases}.$$

In another preferred example, the step of processing the non-real-time messages cached in the common queue according to the single processing amount in S4 includes:

the single processing amount y is retrieved after it is detected that all the real-time messages in the priority processing queue are completely processed; and

the non-real-time messages cached in the common queue are processed according to single processing amount y every time.

As at least one alternative embodiment, the single processing amount y is retrieved after it is detected that all the real-time messages in the priority processing queue are completely processed. The non-real-time messages cached in the common queue are processed according to the single processing amount y every time. Whether a new message is required to be received from the firmware buffer is checked after the single processing amount of non-real-time messages are processed every time, if yes, S1 is returned to be performed, and if no, the single processing amount of non-real-time messages are continued to be processed until all the non-real-time messages are completely processed.

As a preferred solution, in a case that a message in the common queue overflows, a non-real-time message stored for the longest time at a head of the common queue is discarded.

It should be noted that a message processing capacity of the CPU should be greater than the receiving rate of the real-time messages such that an overflow phenomenon of the priority processing queue can be avoided. If performance saturation occurs on a gateway, the non-real-time messages are discarded such that the real-time messages can be ensured to be processed in time, and packets cannot be lost as much as possible. If overflow is about to occur on a common queue, a message stored for the longest time at a head of the queue is selected to be discarded such that a new message can be received.

Accordingly, the disclosure further provides an apparatus for processing messages, which may implement all flows of the method for processing messages in the above example.

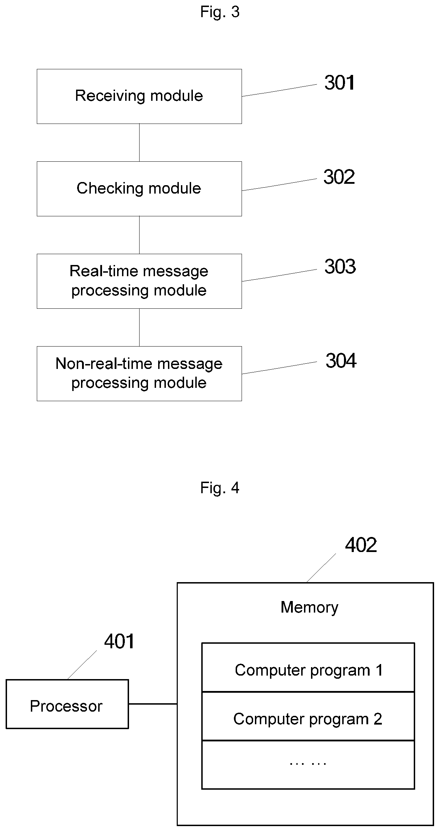

With reference to Fig. 3, a schematic structural diagram of a preferred example of an apparatus for processing messages according to the disclosure is shown in Fig. 3. The apparatus for processing messages includes:

a receiving module 301, configured to receive the messages from a firmware buffer sequentially, cache messages satisfying a real-time message condition into a priority processing queue, and cache messages not satisfying the real-time message condition into a common queue, wherein the messages satisfying the real-time message condition are real-time messages, and the messages not satisfying the real-time message condition are non-real-time messages;

a checking module 302, configured to check whether all messages in the firmware buffer are completely received; if no, return to S1 until all the messages in the firmware buffer are completely received; and if yes, adjust a single processing amount of the non-real-time messages dynamically according to the number of the real-time messages in the priority processing queue, and obtain an adjusted single processing amount of the non-real-time messages;

a real-time message processing module 303, configured to process all the real-time messages cached in the priority processing queue; and

a non-real-time message processing module 304, configured to process the non-real-time messages cached in the common queue according to the adjusted single processing amount, check whether a new message is required to be received from the firmware buffer after the adjusted single processing amount of non-real-time messages are processed every time, if yes, return to S1, and if no, continue to process the adjusted single processing amount of non-real-time messages until all non-real-time messages are completely processed.

As at least one alternative embodiment, the checking module adjusts the single processing amount of the non-real-time messages dynamically according to the number of the real-time messages in the priority processing queue, and obtains the adjusted single processing amount of the non-real-time messages as follows: determine the number of the real-time messages in the priority processing queue; and adjust the single processing amount of the non-real-time messages dynamically according to a numerical relation between the number of the real-time messages, a first threshold and a second threshold, and obtain the adjusted single processing amount of the non-real-time messages, wherein the first threshold is less than the second threshold.

As at least one alternative embodiment, the checking module adjusts the single processing amount of the non-real-time messages dynamically according to a numerical relation between the number of the real-time messages, a first threshold and a second threshold, and obtains the adjusted single processing amount of the non-real-time messages as follows: determine a maximum message processing amount of the CPU in a time unit as the adjusted single processing amount in a case that the number of the real-time messages is 0; takes, in a case that the number of the real-time messages is greater than 0 and less than the first threshold, or the number of the real-time messages is greater than or equal to the first threshold and less than or equal to the second threshold, the number of the real-time messages as variables of predetermined functions, adjust the single processing amount of the non-real-time messages dynamically by means of the predetermined functions, and obtain the adjusted single processing amount of the non-real-time messages; and determine a predetermined constant as the adjusted single processing amount in a case that the number of the real-time messages is greater than the second threshold.

As at least one alternative embodiment, the predetermined functions are linear functions, and a slope and an adjustment constant of a linear function in the case that the number of the real-time messages is greater than 0 and less than the first threshold are different from a slope and an adjustment constant of a linear function in the case that the number of the real-time messages is greater than or equal to the first threshold and less than or equal to the second threshold.

As at least one alternative embodiment, the checking module 302 adjusts a single processing amount of the non-real-time messages dynamically according to the number of the real-time messages in the priority processing queue, and obtains an adjusted single processing amount of the non-real-time messages as follows:
adjust the single processing amount of the non-real-time messages dynamically by means of a piecewise function

$$y(x) = \begin{cases} y_1 & x = 0 \\ c_1\text{-}c_2x & 0 < x < A \\ c_3\text{-}c_4x & A \leq x \leq B \\ y_2 & B \leq x \end{cases}$$

, and obtain the adjusted single processing amount y of the non-real-time messages.

As at least one alternative embodiment, x is the number of the real-time messages in the priority processing queue, A is a first threshold, B is a second threshold, $y_1$ is the maximum message processing amount of the CPU in a time unit, $y_2$ is a preset constant used for controlling the processing rate of the non-real-time messages when the real-time messages are seriously accu-

mulated, $c_1$ and $c_3$ are adjustment constants, and $c_2$ and $c_4$ are slopes.

As at least one alternative embodiment, the first threshold is A=a×L, the second threshold is B=b×L, L is a length of the priority processing queue, a and b are coefficients, and a+b=1.

As at least one alternative embodiment, the non-real-time message processing module 304 processes the non-real-time messages cached in the common queue according to the single processing amount as follows:

retrieve the adjusted single processing amount y after it is detected that all the real-time messages in the priority processing queue are completely processed; and

process the non-real-time messages cached in the common queue according to the adjusted single processing amount y every time.

As at least one alternative embodiment, in a case that a message in the common queue overflows, a non-real-time message stored for the longest time at a head of the common queue is discarded.

During specific implementation, the working principle, control flow and achieved technical effect of the apparatus for processing messages provided in an example of the disclosure are correspondingly the same as those of the method for processing messages in the above example, and will not be repeated herein.

With reference to Fig. 4, a schematic structural diagram of a preferred example of a terminal device according to the disclosure is shown in Fig. 4. The terminal device includes a processor 401, a memory 402 and a computer program stored in the memory 402 and configured to be executed by the processor 401. The processor 401 implements the method for processing messages in any one of the above examples when executing the computer program.

Preferably, the computer program may be partitioned into one or more modules/units (such as computer program 1, computer program 2,...). The one or more modules/units are stored in the memory 402 and executed by the processor 401, so as to complete the disclosure. The one or more modules/units may be a series of computer program instruction segments capable of completing a particular function. The instruction segments are used for describing an execution process of the computer program in the terminal device.

The processor 401 may be a central processing unit (CPU), and may be a different general purpose processor, a digital signal processor (DSP), an application specific integrated circuit (ASIC), a field-programmable gate array (FPGA) or a different programmable logic device, a discrete gate or transistor logic device, a discrete hardware component, etc. The general purpose processor may be a microprocessor. The processor 401 may be any conventional processor. The processor 401 is a control center of a terminal device, and is connected to various parts of the terminal device by various interfaces and circuits.

The memory 402 mainly includes a program storage region and a data storage region. The program storage region can store an operating system, an application required by at least one function, etc. The data storage region can store related data, etc. In addition, the memory 402 may be a high-speed random access memory, or a nonvolatile memory, such as a plug-in hard disk, a smart media card (SMC), a secure digital (SD) card and a flash card, or the memory 402 may be a different volatile solid state memory device.

It should be noted that the above terminal device may include but is not limited to a processor and a memory. Those skilled in the art may understand that the schematic structural diagram of Fig. 4 is only an instance of the above terminal device and does not constitute a limitation on the above terminal device, and may include more or less components than those shown in the figure, or combine some components or different components.

An example of the disclosure further provides a computer-readable storage medium. The computer-readable storage medium includes a stored computer program. When running, the computer program controls a device in which the computer-readable storage medium is located to execute the method for processing messages in any one of the above examples.

Examples of the disclosure provide a method and apparatus for processing messages, a terminal device, and a storage medium. An original coherent flow of receiving and processing messages is divided into flows as follows: the messages are received and cached first, and then the messages are processed according to a designed message processing strategy. A processing amount of non-real-time messages is dynamically adjusted according to the number of real-time messages in a priority processing queue, and a single processing amount of the non-real-time messages is obtained. After all the real-time messages are processed, the non-real-time messages are processed according to the single processing amount of the non-real-time messages. Moreover, after the single processing amount of non-real-time messages are processed every time, whether a new message is required to be received from the firmware buffer is checked such that high-priority messages can be prevented from being lost. If yes, messages are received. If no, a single processing amount of non-real-time messages are continued to be processed until all the non-real-time messages are completely processed. Therefore, a packet loss rate of the real-time messages can be reduced, network time delays of the real-time messages can be reduced, timeliness of the real-time messages can be guaranteed, and user experience can be improved.

It should be noted that a system example described above is merely schematic, wherein the unit described as a separate component may be physically separated or not, and a component displayed as a unit may be a physical unit or not, that is, the component may be located at one place, or distributed on multiple network units. Some or all of modules can be selected according to actual requirements to achieve the objective of the solution of the example. In addition, in accompanying drawings of the system example provided in the disclosure, a connection relation between modules indicates that there is communication connection between the modules. Specifically, the communication connection may be implemented as one or more communication buses or signal lines. Those of ordinary skill in the art can understand and implement the disclosure without making creative efforts.

The above embodiments are preferred embodiments of the disclosure. It should be noted that those of ordinary skill in the art can further make several improvements and modifications without departing from a principle of the disclosure. These improvements and modifications should also be regarded as falling within the protection scope of the disclosure.

**Claims**

1. A method for processing messages, comprising:

   S1: receiving the messages from a firmware buffer sequentially, caching messages satisfying a real-time message condition into a priority processing queue, and caching messages not satisfying the real-time message condition into a common queue for buffering, wherein the messages satisfying the real-time message condition are real-time messages, and the messages not satisfying the real-time message condition are non-real-time messages;
   S2: checking whether all messages in the firmware buffer are completely received; if no, returning to S1 until all the messages in the firmware buffer are completely received; and if yes, adjusting a single processing amount of the non-real-time messages dynamically according to the number of the real-time messages in the priority processing queue, and obtaining an adjusted single processing amount of the non-real-time messages;
   S3: processing all the real-time messages cached in the priority processing queue; and
   S4: processing the non-real-time messages cached in the common queue according to the adjusted single processing amount, checking whether a new message is required to be received from the firmware buffer after the adjusted single processing amount of non-real-time messages are processed every time, if yes, returning to S1, and if no, continuing to process the adjusted single processing amount of non-real-time messages until all non-real-time messages are completely processed.

2. The method for processing messages as claimed in claim 1, wherein the adjusting a single processing amount of the non-real-time messages dynamically according to the number of real-time messages in the priority processing queue, and obtaining an adjusted single processing amount of the non-real-time messages in S2, comprises:

determining the number of the real-time messages in the priority processing queue; and adjusting the single processing amount of the non-real-time messages dynamically according to a numerical relation between the number of the real-time messages, a first threshold and a second threshold, and obtaining the adjusted single processing amount of the non-real-time messages, wherein the first threshold is less than the second threshold.

3. The method for processing messages as claimed in claim 2, wherein the adjusting the single processing amount of the non-real-time messages dynamically according to a numerical relation between the number of the real-time messages, a first threshold and a second threshold, and obtaining the adjusted single processing amount of the non-real-time messages, comprises:

determining a maximum message processing amount of a Central Processing Unit (CPU) in a time unit as the adjusted single processing amount in a case that the number of the real-time messages is 0;
taking, in a case that the number of the real-time messages is greater than 0 and less than the first threshold, or the number of the real-time messages is greater than or equal to the first threshold and less than or equal to the second threshold, the number of the real-time messages as variables of predetermined functions, adjusting the single processing amount of the non-real-time messages dynamically by means of the predetermined functions, and obtaining the adjusted single processing amount of the non-real-time messages; and
determining a predetermined constant as the adjusted single processing amount in a case that the number of the real-time messages is greater than the second threshold.

4. The method for processing messages as claimed in claim 3, wherein the predetermined functions are linear functions, and a slope and an adjustment constant of a linear function in the case that the number of the real-time messages is greater than 0 and less than the first threshold are different from a slope and an adjustment constant of a linear function in the case that the number of the real-time messages is greater than or equal to the first threshold and less than or equal to the second threshold.

5. The method for processing messages as claimed in any one of claims 2-4, wherein the first threshold is $A=a\times L$, the second threshold is $B=b\times L$, L is a length of the priority processing queue, a and b are coefficients, and $a+b=1$.

6. The method for processing messages as claimed in claim 5, wherein the processing the non-real-time messages cached in the common queue according to the adjusted single processing amount in S4 comprises:

retrieving the adjusted single processing amount after it is detected that all real-time messages in the priority processing queue are completely processed; and
processing the non-real-time messages cached in the common queue according to the adjusted single processing amount every time.

7. The method for processing messages as claimed in claim 6, wherein in a case that a message in the common queue overflows, a non-real-time message stored for a longest time at a head of the common queue is discarded.

8. An apparatus for processing messages, comprising:

a receiving module, configured to receive the messages from a firmware buffer sequentially, cache messages satisfying a real-time message condition into a priority processing queue, and cache messages not satisfying the real-time message condition into a common queue, wherein the messages satisfying the real-time message condition are real-time messages, and the messages not satisfying the real-time message condition are non-real-time messages;
a checking module, configured to check whether all messages in the firmware buffer are completely received; if no, return to S1 until all the messages in the firmware buffer are completely received; and if yes, adjust a single processing amount of the non-real-time messages dynamically according to the number of the real-time messages in the priority processing queue, and obtain an adjusted single processing amount of the non-real-time messages;
a real-time message processing module, configured to process all the real-time messages cached in the priority processing queue; and

a non-real-time message processing module, configured to process the non-real-time messages cached in the common queue according to the adjusted single processing amount, check whether a new message is required to be received from the firmware buffer after the adjusted single processing amount of non-real-time messages are processed every time, if yes, return to S1, and if no, continue to process the adjusted single processing amount of non-real-time messages until all non-real-time messages are completely processed.

9.  A terminal device, comprising a processor, a memory and a computer program stored in the memory and configured to be executed by the processor, wherein the processor implements the method for processing messages as claimed in any one of claims 1-7 when executing the computer program.

10.  A computer-readable storage medium, comprising a stored computer program, wherein when running, the computer program controls a device in which the computer-readable storage medium is located to execute the method for processing messages as claimed in any one of claims 1-7.

Fig. 1

| | |
|---|---|
| Messages are received from a firmware buffer sequentially, messages satisfying real-time message condition are cached into a priority processing queue, and messages not satisfying the real-time message condition are cached into a common queue, wherein the messages satisfying the real-time message condition are real-time messages, and the messages not satisfying the real-time message condition are non-real-time messages | S1 |

| | |
|---|---|
| Whether all the messages in the firmware buffer are completely received is checked; if no, S1 is returned to be performed until all the messages in the firmware buffer are completely received; and if yes, a single processing amount of the non-real-time messages are adjusted dynamically according to the number of the real-time messages in the priority processing queue, and an adjusted single processing amount of the non-real-time messages are adjusted | S2 |

| | |
|---|---|
| All the real-time messages cached in the priority processing queue are processed | S3 |

| | |
|---|---|
| The non-real-time messages cached in the common queue are processed according to the single processing amount, whether a new message is required to be received from the firmware buffer is checked after a single processing amount of non-real-time messages are processed every time, if yes, S1 is returned to be performed, and if no, a single processing amount of non-real-time messages are continued to be prpcessed until all the non-real-time messages are completely processed | S4 |

Fig. 2

```
                        ┌──────────────┐
                        │    Start     │
                        └──────┬───────┘
                               │
                               ▼
              ┌────────────────────────────────┐
              │ A single message is received   │
              └────────────────┬───────────────┘
                               │
                               ▼
                        ╱╲                    No    ┌──────────────────────┐
                      ╱ Whether to ╲────────────────│ The message is added │
                     ╱  transmit the ╲              │ into a common queue  │
                      ╲ message first?╱             └──────────────────────┘
                        ╲╱                                    │
                         │ Yes                                │
                         ▼                                    │
              ┌────────────────────────┐                      │
              │ The message is added   │                      │
              │ into a priority        │                      │
              │ processing queue       │                      │
              └──────────┬─────────────┘                      │
                         │                                    │
                         ▼◄───────────────────────────────────┘
                        ╱╲
                      ╱ Are all the ╲
                     ╱   messages     ╲  No
                     ╲  completely    ╱
                      ╲ received?    ╱
                        ╲╱
                         │ Yes
                         ▼
              ┌────────────────────────┐
              │ x is acquired, y is    │
              │ computed, and all      │
              │ real-time messages     │
              │ are processed          │
              └──────────┬─────────────┘
                         │
                         ▼
              ┌────────────────────────┐
              │ y non-real-time        │
              │ messages are processed │
              └──────────┬─────────────┘
                         │
                         ▼
                        ╱╲
                 Yes  ╱ Whether a new ╲
                     ╱ message is required ╲
                     ╲ to be received?    ╱
                        ╲╱
                         │ No
                         ▼
                        ╱╲            No
                      ╱ Are non-real-time ╲
                     ╱   messages are       ╲
                     ╲ completely processed?╱
                        ╲╱
                         │ Yes
                         ▼
                  ┌──────────────┐
                  │     End      │
                  └──────────────┘
```

Fig. 3

```
┌─────────────────────────────┐
│      Receiving module       │────── 301
└─────────────────────────────┘
                │
┌─────────────────────────────┐
│      Checking module        │────── 302
└─────────────────────────────┘
                │
┌─────────────────────────────┐
│    Real-time message        │────── 303
│    processing module        │
└─────────────────────────────┘
                │
┌─────────────────────────────┐
│   Non-real-time message     │────── 304
│    processing module        │
└─────────────────────────────┘
```

Fig. 4

```
                                            402
                        ┌──────────────────────────────────────┐
                        │              Memory                  │
                        │                                      │
           401          │   ┌──────────────────────────────┐   │
                        │   │    Computer program 1        │   │
  ┌──────────────┐      │   ├──────────────────────────────┤   │
  │  Processor   │──────│   │    Computer program 2        │   │
  └──────────────┘      │   ├──────────────────────────────┤   │
                        │   │          … …                 │   │
                        │   └──────────────────────────────┘   │
                        └──────────────────────────────────────┘
```

| **INTERNATIONAL SEARCH REPORT** | International application No. |
| --- | --- |
| | **PCT/CN2023/076263** |

| **A.** | **CLASSIFICATION OF SUBJECT MATTER** |
| --- | --- |

H04L41/5022(2022.01)i

According to International Patent Classification (IPC) or to both national classification and IPC

| **B.** | **FIELDS SEARCHED** |
| --- | --- |

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNKI; CNTXT; ENTXT, ENTXTC; IEEE: 队列, 调度, 实时, 非实时, 空闲, 普通, 优先, 时延, 余量, 数量, 数目, 阈值, 分段, queue, schedul+, real-time, priority, delay, threshold, vacancy, amount, dynamic

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 114567566 A (SHANGHAI JIANXING TECHNOLOGY CO., LTD.) 31 May 2022 (2022-05-31) description, paragraphs [0004]-[0077] | 1-10 |
| X | CN 101459932 A (BEIJING JIAOTONG UNIVERSITY) 17 June 2009 (2009-06-17) claims 1-4, and description, pages 5-7 | 1-10 |
| A | CN 112737978 A (THE 7TH RESEARCH INSTITUTE OF CHINA ELECTRONICS TECHNOLOGY GROUP CORP.) 30 April 2021 (2021-04-30) entire document | 1-10 |
| A | WO 2021254475 A1 (HUAWEI TECHNOLOGIES CO., LTD.) 23 December 2021 (2021-12-23) entire document | 1-10 |
| A | US 2015271089 A1 (TANG, L. et al.) 24 September 2015 (2015-09-24) entire document | 1-10 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **16 March 2023** | **22 March 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2023/076263**

| Patent document cited in search report | | | Publication date (day/month/year) | Patent family member(s) | | | Publication date (day/month/year) |
|---|---|---|---|---|---|---|---|
| CN | 114567566 | A | 31 May 2022 | None | | | |
| CN | 101459932 | A | 17 June 2009 | None | | | |
| CN | 112737978 | A | 30 April 2021 | None | | | |
| WO | 2021254475 | A1 | 23 December 2021 | CN | 113824652 | A | 21 December 2021 |
| US | 2015271089 | A1 | 24 September 2015 | WO | 2014067052 | A1 | 08 May 2014 |

Form PCT/ISA/210 (patent family annex) (July 2022)

**EP 4 482 106 A1**

**REFERENCES CITED IN THE DESCRIPTION**

**Patent documents cited in the description**

- CN 202210142967